# EUROPEAN PATENT APPLICATION

(11) **EP 2 278 524 A1**
(43) Date of publication of application: **26.01.2011**
(21) Application number: 10164814.5
(22) Date of filing: 03.06.2010
(51) Int. Cl.: G06F 21/00

(54) **System and method for software activation**

(30) Priority: 22.06.2009 US 219067 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A system and related method for activating use of software on a computing device utilizes a license server configured so that, responsive to a communication link being available between the license server and the computing device, the license server receives from the computing device, via the communication link, an activation request including (a) a software identifier identifying the software, (b) a device identifier identifying the computer, and (c) a license key for the software, accesses a database storing previously received software identifiers, device identifiers, and license keys, determines an activation instruction through application of a usage policy that compares the activation request to records within the database, and sends the activation instruction to the computing device.

## Description

This application claims priority to U.S. Provisional Application No. 61/219,067 which was filed June 22, 2009 and which is fully incorporated herein by reference.

### BACKGROUND OF THE INVENTION

### Field of the Invention

The field of the present invention relates to systems and methods for software activation.

### Description of the Related Art

Currently, there exist numerous ways to activate software run on various different computing devices. Examples include activation via the Internet or via a phone transaction. However, most software activation programs view the software license as being static and immutable. More importantly, though, is that even if software licenses are is easily modified, currently no systems or techniques exist to facilitate software activation in the face of modifications made to a software license.

### SUMMARY OF THE INVENTION

The present invention is directed toward a system and method for activating the use of software on a computing device. Through a communication link being available between the computing device and a license server, the software is activated for use on the computing device. By receiving appropriate data from the computing device, the license server applies a usage policy to determine an activation instruction, which is thereafter sent to the computing device.

In a first separate aspect of the present invention, with respect to the system, in response to the communication link being available between the license server and the computing device, the license server is configured to: (1) receive from the computing device, via the communication link, an activation request including (a) a software identifier identifying the software, (b) a device identifier identifying the computing device, and (c) a license key for the software; (2) access a database storing previously received software identifiers, device identifiers, and event identifiers; (3) determine an activation instruction through application of a usage policy, wherein application of the usage policy includes a comparison between the activation request and records within the database; and (4) send the activation instruction to the computing device.

In a second separate aspect of the present invention, building upon the first separate aspect, the usage policy may take any one of several different forms. In one form, the usage policy increases the number of licensed activations for the software over time. In another form, the usage policy decreases the number of licensed activations for the software over time. In yet another form, the usage policy limits usage time for the software across all activations for a particular license key. In yet another form, the usage policy limits software features available during use of the software, and may even enable additional software features over time.

In a third separate aspect of the present invention, building upon the first separate aspect, following establishment of the communication link between the license server and the computing device, the license server receives an activation request from the computing device via the communication link. The activation request includes: (a) a software identifier identifying the software, (b) a device identifier identifying the computer computing, and (c) a license key for the software. A database storing previously received and associated software identifiers, device identifiers, and license keys is then accessed, and a usage policy is then applied as part of a comparison between the activation request and records within the database. Through application of the usage policy, an activation instruction is determined, and that activation instruction is thereafter sent to the computing device.

In a fourth separate aspect of the present invention, any of the foregoing aspects may be employed in combination. Aspects listed for the system may be incorporated into the method, just as aspects listed for the method may be incorporated into the system.

Accordingly, an improved system and method for auditing software usage on a computing device are disclosed. Advantages of the improvements will appear from the drawings and the description of the preferred embodiment.

### BRIEF DESCRIPTION OF THE DRAWINGS

In the drawings, wherein like reference numerals refer to similar components:

FIG. 1 schematically illustrates a system for auditing software usage on a computing device;

FIG. 2 schematically illustrates the components ofa device identifier; and

FIG. 3 is a flowchart illustrating a software process for activating the use of software.

### DETAILED DESCRIPTION

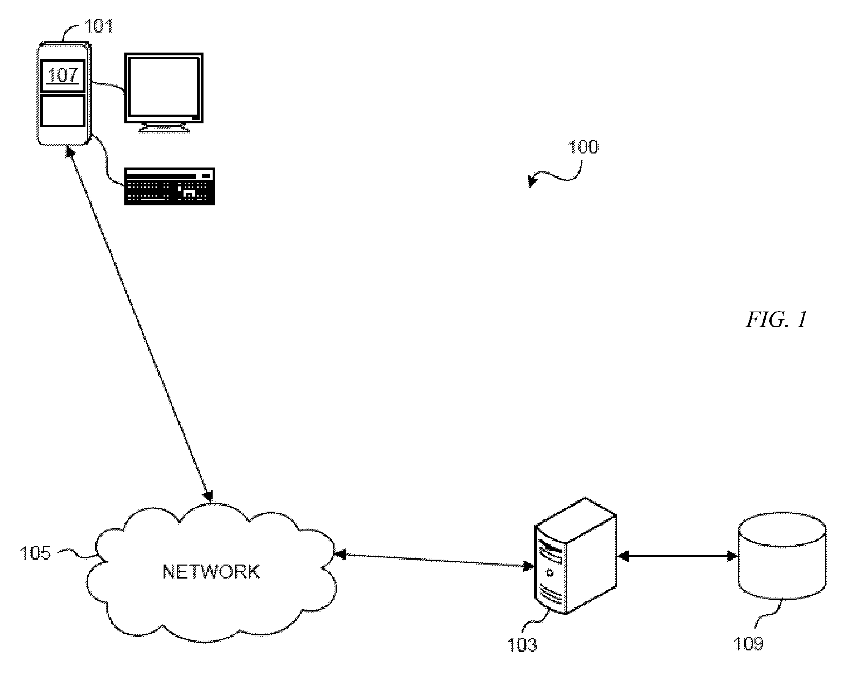

Turning in detail to the drawings, Fig. 1 illustrates a system which is arranged to enable activation of software use on the computing device 101 upon request from the computing device 101. Any additional number of computing devices may connect to the license server 103 via the network 105, which enables bidirectional communications between any such computing devices and the license server 103. Hereinafter, any such computing device, including the computing device 101 shown, will be referred to as "computer", with the understanding that they may be any machine or device capable of communication with a computer network, such as a game console, a personal computer, a server computer, a laptop computer, a tablet computer, a personal digital assistant, a mobile phone, a wireless communication device, an onboard vehicle computer, and the like.

The computer 101 communicates over the network 105 with the license server 103, which is also communicably connected to the network 105, by establishing a communication link with the license server 103. This single communication link 103 may actually be a series of communication links, such as a first communication link between the network 105 and the computer, and a second communication link between the network 105 and the license server 103. These various communication links may take any form desired. For example, the communication links may be established through intermediaries such as a private communications network or over a public communications network, the Internet being an example of the latter. Alternatively, a private communications network, a public communications network, or any combination of one or more of such networks may form the network 105. Also, the communication links may be established directly or indirectly, permanent or transitory, wired or wireless. In some instances, the communication links may be established as needed. Most typically, the communication link will be established as needed and according to pre-established network protocol via the Internet or other wide area network (WAN).

The computer 101 includes one or more software applications 107, or other programmed code, which requires a license and authorization for use. Authorization is obtained through the processes described in further detail below. The software 107 includes an activation routine which runs at least at the time of licensing, or the first time the software is used, to authenticate and allow activation of the software on the particular computer 101. The activation routine may also be run at any desired interval, whether regular or irregular, to maintain the activation and ensure that the use of the software on the computer 101 remains a licensed use. Alternatively, the computing device 101 may include a separate activation application to perform the functions described herein for the activation subroutine. However, there is a risk that a separate activation application might not be active on the computing device while the software is being used, thereby causing loss of use data for the software that may be important to the terms of the license. For this reason, incorporating the activation routine into the software 107 is preferred.

The activation routine collects information about the computer and software, generates an activation request, initiates or establishes the communication link with the license server 103, transmits activation request. As a result, the license server 103 responds by sending an activation instruction, which includes license terms for activation and use of the software 107 on the computer 101.

The activation request is transferred via a communication link established between the computing device 101 and the license server 101, and the data contained within the activation request is maintained within the database 109. As shown, the database 109 resides on the license server 103, however, in practice the database may reside on any machine, on any recordable medium, or be resident within any memory space to which the license server 103 is communicably connected, either directly or indirectly.

Following receipt of the activation request over the communication link, the database 109 is accessed to determine whether either of the device identifier or the software identifier, or any of the components of these identifiers, are currently stored as part of records within the database. The database 109 stores records of previously received audit data, against which the received audit data is compared. Initially, the comparison is performed as described in further detail below. Following those processes, if no matching records are found with reference to either of the device identifier, the software identifier, or any of the components thereof in the received activation request, then a new record is entered into the database 109 reflecting the received activation request. If one or more of the device identifier, the software identifier, or any of the components thereof in the received activation request are currently included as part of existing records within the database 109, then the currently existing record, or records, as appropriate, are updated to include the received activation request. In either case, the action taken in response to the activation request is also entered into the database 109.

The activation request includes at least a software identifier, a device identifier, and a license key for the software. The software identifier includes at least a product identifier, and may also include a software signature. The product identifier identifies the title of the software being used on the computing device 101 by title name, product number, product key, or any other appropriate data that indicates the specific software title. The software signature identifies the software being used through creation of a software signature on the computing device. This software signature may then be compared against software signatures on file by the software developer, distributor, and/or owner, to identify the software title being used on the computing device. This additional identification of the software title being used may serve as a cross check on the product identifier. In the event that the software signature received in the activation request does not match any software signature on file, this may be an indicator that the software being used on the computer is an unauthorized copy of the software. In such instances, the activation request may still be added to the database 109, and the activation instruction issued may include a denial of use. How such situations are handled by the activation process is left up to the desires of the software developer, distributor, and/or owner.

The software signature may be generated in any number of ways, including through the use of commonly used hash functions, checksum functions, software fingerprint functions, and the like. Such functions, along with methods of implementing such functions to produce software signatures (also sometimes referred to as "fingerprints"), are well known to those of skill in the relevant arts, and as such are not discussed in further detail herein.

The software identifier may also include information identifying the version number of the software being used, a license identifier, and/or a license number. Inclusion of the version number enables licensing usage policies to be applied to the different software versions currently in use by users of the software.

The license key is a key provided to the user under which the user presumes to have a license to use the software. The user may obtain the license key through a retail purchase, a site contract, or through any other commercial or retail source. Management of the license keys originates with the software developer, distributor, and/or owner. The processes described herein enable more detailed control over the scope of the license and the associated terms of use.

Depending upon the circumstances of usage and licensing for the software, the activation request may also include additional information to further identify the software, the computer, the user, or to track other activity of the software beyond those which are expressly described to herein.

The activation routine, or alternatively a separate activation application, may include a device identifier routine that collects information regarding computing device by checking a number of parameters which, collectively, are expected to uniquely identify computing device. The description below presumes that the software includes a routine which generates the device identifier. The parameters checked may include, for example, hard disk volume name, user name, device name, user password, hard disk initialization date, etc. The collected information includes information that identifies the hardware on which the software is used, such as, for example, CPU number, or unique parameters associated with the firmware in use. The system information may further include system configuration information, such as amount of memory, type of processor, software or operating system serial number, etc. The parameters checked may also include, alternatively or in addition, virtual machine specifications. Examples of virtual machine specifications include, but are not limited to, information relating to virtual processors, virtual BIOS, virtual memory, virtual graphics, virtual IDE drives, virtual SCSI devices, virtual PCI slots, virtual floppy drives, virtual serial (COM) ports, virtual parallel (LPT) ports, virtual keyboard, virtual mouse and drawing tablets, virtual Ethernet card, virtual networking, virtual sound adapter, etc.

Based on the collected information, the routine generates a device identifier that uniquely identifies the user's computer. The device identifier may be stored in a hidden directory of the device, and/or it may be generated each time a user event occurs, or at any other desired time. The device identifier, by virtue of the software being used on the computing device or otherwise having access to the computing device's hardware and file system, is generated by a process which operates on data indicative of the computing device's configuration and hardware.

The device identifier may be generated using a combination of user-configurable and non-user-configurable machine parameters as input to a process that results in the device identifier, which may be expressed in digital data as a binary number. Each machine parameter is data determined by a hardware component, software component, or data component specific to the device that the unique identifier pertains to. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier, that has a very high probability of remaining unchanged during normal operation of the target device. Thus, the resulting device identifier should be highly specific, unique, reproducible and stable as a result of properly selecting the machine parameters.

The software routine that generates the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured device identifier routine operating or otherwise having had access to the same computing device for which the device identifier was first generated. Conversely, each identifier, again to a very high degree of certainty, can be successfully reproduced by the suitably configured device identifier routine operating or otherwise having access to the same computing device on which the identifier was first generated.

The device identifier routine may operate by performing a system scan to determine a present configuration of the computing device. The routine may then select the machine parameters to be used as input for generating the unique device identifier. Selection of parameters may vary depending on the system configuration. Once the parameters are selected, the routine may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; BlackBox model; BlackBox serial; BlackBox details; BlackBox damage map; BlackBox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

In one example, the device identifier may also be generated by utilizing machine parameters associated with one or more of the following: machine model, processor model, processor details, processor speed, memory model, memory total, network model of each Ethernet interface, network MAC address of each Ethernet interface, BlackBox Model, BlackBox Serial (e.g., using Dallas Silicone Serial DS-2401 chipset or the like), OS install date, nonce value, and nonce time of day.

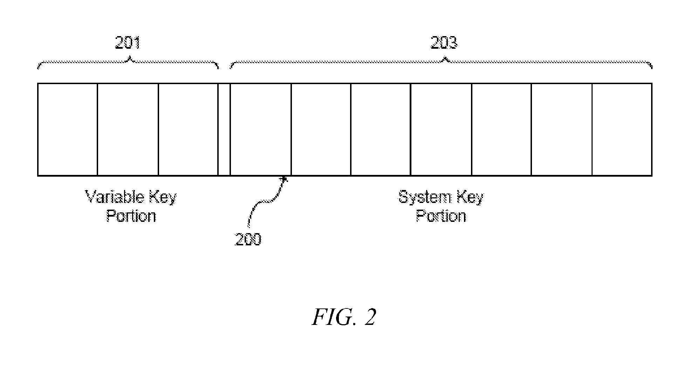

Fig. 2 illustrates an exemplary embodiment of a device identifier 200, which may include two components - namely, a variable key portion 201 and a system key portion 203. The variable key portion 201 may be generated by reference to a variable platform parameter, such as via reference to system time information, although other parameters which are variable may be utilized in other embodiments. The system key portion 203 may include the above described parameters expected to be unique to the computing device on which the software is used, such as, for example, hard disk volume name, user name, computer name, user password, hard disk initialization date, or combinations of the parameters described above. The variable key portion 201 and/or the system key portion 203 may be combined with the IP address and/or other platform parameters of the computing device. The device identifier, or portions thereof, may be encrypted to add an additional layer of specificity and security.

The software may actively monitor itself to determine when an activation request is needed, much as a separate activation application would, and initiates the activation routine at appropriate times. If the software is configured thusly, it preferably sets an activation flag to facilitate the monitoring process. Thereafter, the activation routine, or the separate activation application, can detect and respond appropriately to the flag and any additional data included therewith.

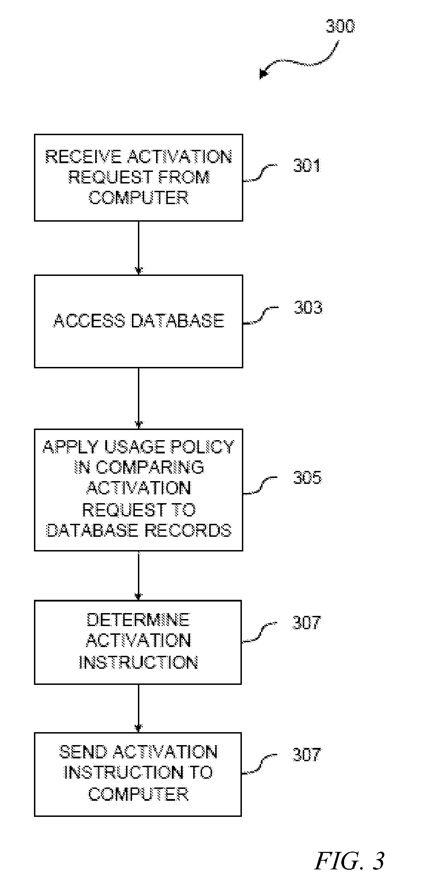

Fig. 3 illustrates the process 300 of the activation server after receiving 301 an activation request from a computer. Following receipt 301 of the activation request, the activation server accesses the database, which contains records of data previously received activation requests. The server checks the data received as part of the activation request against the device identifiers, software identifiers, and/or license keys that are contained within the database. Regardless of whether a match is found within the database, the server applies 305 a usage policy as part of the process of determining 307 an activation instruction. Once the activation instruction is determined 307, then the activation instruction is sent 309 to the requesting computer.

The usage policy determines the character of the activation instruction that is sent to the requesting computer. The usage policy may take almost any form desired by the software developer, distributor, and/or owner, and is based upon the terms associated with the license key submitted as part of the activation request. These terms may be established in advance, and they may be changed over time according to an agreement between the licensee and the software developer, distributor, and/or owner. For example, the terms may be a simple limit to the number of licensed activations, i.e., the number of licensed computers. Optionally, the number of licensed activations may increase over time. The period and the amount of the increase are left up to the agreement between the licensee and the software developer, distributor, and/or owner.

The activation server may be tasked with tracking or determining when, based on preestablished criteria, the number of licenses should be increased or decreased. In such cases, the activation server adjusts the usage policy as appropriate based upon the preestablished criteria. For example, if a computer submits an activation request, but the current usage policy indicates that activation should be denied, the activation server may determine if the usage policy is current by checking the preestablished criteria. If the usage policy is found to be not current, then the activation server updates the usage policy based upon the preestablished criteria.

As yet another option, the number of licensed activations may decrease over time in a similar manner as discussed above.

As another option, the usage policy may be based upon the total amount of application usage time across all installations for one or a set of license keys. For such usage policies, the activation routine is configured to periodically establish a communication link with the activation server and report the application usage time. In this manner, the activation server is able to track the total application usage time on the computer. Further, when a single license key, or a set of license keys, are associated with time limitation terms, then the activation server can track application usage times across all application installs, regardless of how many computers on which the application is installed.

As another option, the usage policy may either increase or decrease the availability of software features over time. For such usage policies, the activation routine functions much in the same way as described for time-based usage policies as described above, except instead of the activation routine reporting usage time, the activation routine here would periodically communicate with the activation server so that the activation server, through application of the usage policy, may control the available features of the software.

For more detailed control of software usage, any of the above examples may be used in combination. In addition, application of usage policies may incorporate any other desirable usage criteria.

The activation instruction includes at least a basic license grant or license denial when the usage policy is based upon the numbers of activated installations per license key or set of license keys. When the usage policy is time-based, the activation instruction might additionally include, in the case of a license grant, a set time period until the next required submission of an activation request. When the usage policy is feature-based, the activation instruction might additionally include, in the case of a license grant, a set of features that the software will be available to the user. The activation instruction will generally reflect an application of the license usage terms to the particular computer making the activation request.

In accordance with aspects of the embodiments described herein, one or more of the techniques and methodologies described herein may be performed by embedded applications, platforms, or systems. The methods described herein may be performed by a general-purpose computer system and/or an embedded application or component of a special-purpose apparatus (e.g., traffic controller, traffic signal, surveillance cameras, sensors, detectors, vehicles, vehicle navigation systems, mobile phones, PDAs, etc.).

For example, in one embodiment, the special-purpose device comprises an embedded platform running an embedded Linux operating system (OS) or the like. For example, the unique device identifier or fingerprint for the special-purpose device may be created by collecting and using one or more of the following information: machine model; processor model; processor details; processor speed; memory model; memory total; network model of each Ethernet interface; network MAC address of each Ethernet interface; BlackBox model (e.g., any Flash device); BlackBox serial (e.g., using Dallas Silicone Serial DS-2401 chipset or the like); OS install date; nonce value; nonce time of day; and any other predefined hardware information stored (optionally encrypted) in EEPROM or the like; any variations/combinations thereof.

Thus, a system and a method for auditing software usage on a computing device are disclosed. While embodiments of this invention have been shown and described, it will be apparent to those skilled in the art that many more modifications are possible without departing from the inventive concepts herein. The invention, therefore, is not to be restricted except in the spirit of the following claims.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A system for activating use of software on a computing device, the system comprising:
a license server configured so that, in response to a communication link being available between the license server and the computing device, the license server:
receives from the computing device, via the communication link, an activation request including (a) a software identifier identifying the software, (b) a device identifier identifying the computing device, and (c) a license key for the software;
accesses a database storing previously received software identifiers, device identifiers, and license keys;
determines an activation instruction through application of a usage policy,
wherein application of the usage policy includes a comparison between the activation request and one or more records within the database; and
sends the activation instruction to the computing device.

2. The system of claim 1, wherein the usage policy increases a number of licensed activations for the software over time.

3. The system of claim 1, wherein the usage policy decreases a number of licensed activations for the software over time.

4. The system of claim 1, wherein the usage policy limits usage time across all activations for the license key.

5. The system of claim 4, wherein the usage time increases over time.

6. The system of claim 1, wherein the usage policy alters software features available during use of the software.

7. The system of claim 6, wherein the usage policy enables additional software features over time.

8. The system of claim 1, wherein the activation instruction includes an activation denial.

9. The system of claim 1, wherein the license server is further configured to update the database to reflect the activation request and the resulting activation instruction.

10. A method for activating use of software on a computing device, the method comprising:
establishing a communication link between a data collection server and the computing device;
receiving at the data collection server from the computing device, via the communication link, an activation request including (a) a software identifier identifying the software, (b) a device identifier identifying the computing device, and (c) a license key for the software;
accessing a database storing previously received software identifiers, device identifiers, and license keys;
applying a usage policy as part of a comparison between the activation request and records within the database;
determining an activation instruction from the applied usage policy; and
sending the activation instruction to the computing device.

11. The method of claim 10, wherein the usage policy increases a number of licensed activations for the software over time.

12. The method of claim 10, wherein the usage policy decreases a number of licensed activations for the software over time.

13. The method of claim 10, wherein the usage policy limits usage time across all activations for the license key.

14. The method of claim 13, wherein the usage time increases over time.

15. The method of claim 10, wherein the usage policy alters software features available during use of the software.
